Europäisches Patentamt

(19) European Patent Office

Office européen des brevets

(11) Publication number: **0 208 401 B1**

# (12) EUROPEAN PATENT SPECIFICATION

(45) Date of publication of patent specification: **15.05.91**

(21) Application number: **86303744.6**

(22) Date of filing: **16.05.86**

(51) Int. Cl.⁵: **A46B 13/02, A46B 3/06, A46B 7/04, A46B 9/04, A46D 3/04, H01H 9/06, H02J 7/00, A47K 1/09**

(54) Power-driven cleaning brush.

(30) Priority: **10.06.85 US 743100**

(43) Date of publication of application:
**14.01.87 Bulletin 87/03**

(45) Publication of the grant of the patent:
**15.05.91 Bulletin 91/20**

(84) Designated Contracting States:
**AT BE CH DE FR GB IT LI LU NL SE**

(56) References cited:
| | |
|---|---|
| **WO-A-84/00099** | **DE-A- 2 825 179** |
| **DE-B- 1 160 821** | **DE-C- 357 041** |
| **FR-A- 784 709** | **FR-A- 2 418 636** |
| **GB-A- 1 438 372** | **GB-A- 2 139 483** |
| **US-A- 1 498 215** | **US-A- 4 079 517** |
| **US-A- 4 156 620** | |

(73) Proprietor: **Bausch & Lomb Oral Care Division Inc.**
**1726 Montreal Circle 14**
**Tucker Georgia 30084(US)**

(72) Inventor: **Crawford, Alan D.**
**2615 West Victory Boulevard, Apt B., Burbank**
**California 91505(US)**
Inventor: **Johnson, Alan B.**
**18706 Edleen Drive, Tarzana**
**California 913556(US)**
Inventor: **Trenary, John M.**
**924 Sailors Reef, Fort Collins**
**Fort Collins, Colorado 80525(US)**

(74) Representative: **Dealtry, Brian**
**Eric Potter & Clarkson St. Mary's Court St. Mary's Gate**
**Nottingham NG1 1LE(GB)**

## Description

Technical Field

This invention relates to the field of cleaning devices, and more particularly relates to a new and improved automatic cleaning device having improved electro-mechanical characteristics for cleaning, polishing, scrubbing or the like. In the preferred form illustrated, the device embodies a periodontal (e.g. tooth brush) device constructed and arranged to reduce oral debris, calculus formation, and periodontal disease.

Related Patents

The present invention constitutes a modification of applicant-assignees' prior United States Patent No. 4,156,620 granted May 29, 1979. Such patent constitutes a continuation-in-part of Serial No. 489,812, filed July 18, 1974, now abandoned.

Background of the Invention

Heretofore, it has been known to provide various types of powered brush devices for cleaning, polishing, scrubbing or the like. Such devices have formal application, for example , in cleaning, polishing, and scrubbing items including cuticles, jewelry, housewares (e.g. utensils), teeth or the like wherein there is a need to treat small and/or relatively inexcessible surfaces which are curved as well as flat. In cleaning teeth for example, prior powered tooth brushes have included tufts and bristles moved in a rotary, arcuate, reciprocating, or orbital path by a power mechanism and on larger paths by hand movement. Another design includes powered brushes in which the brush head is substantially stationary and individual tufts are mechanically rotated along their own axis but unidirectionally. Such prior powered brushes, for example, are disclosed in U.S. Patent No. 2,215,031 to N. Elmore wherein the individual tufts of the brush head continuously rotate in one direction. Because of this unidirectional rotation, the individual tufts of these bristles tend to "run-out" of the crevices between large surfaces of teeth. In the mouth, the interproximal crevices and irregularly shaped openings make it difficult to insert the tufts of the brush into the crevices at right angles due to the curvature of the dental arch. This tendency to move out of a crevice of indentation impairs the cleaning efficiency of the toothbrush because the tuft is difficult to position within a crevice for an amount of time adequate to achieve removal of foreign matter deposited within the crevice.

In applicant-assignees prior U.S. Patent No. 4,156,620, the electric-toothbrush disclosed includes means for rotating at least one tuft about its central axis in a controlled reciprocating manner whereby adjacent tuft is rotated a predetermined number of turns in one direction and then rotated a predetermined number of turns in the opposite direction relative to an adjacent tuft.

More specifically and as disclosed in said prior patent, in a preferred embodiment of the invention there is provided a plurality of tufts of filaments, and each of the tufts is rotated about its own axis in a controlled and predetermined manner. In particular, each tuft is rotated in a controlled reciprocal fashion and immediately adjacent tufts are counter-rotated. The tufts are rotated about their central axis in a first direction from a generally neutral position of maximum projected length to a position of maximum filament twist so that the projected length of the tuft diminishes and the tuft is stiffened for effective power transmission, and the tufts are reciprocally rotated about their central axis from the position of maximum filament twist. The last step of reciprocal rotation moves the filaments in each reciprocating cycle from a position of maximum twist in a first direction and a minimum projected length to a position of maximum twist in a second direction in generally the same minimum projected length, and then back to a position of maximum twist in a first direction and a minimum projected length while three times passing through a general neutral position of maximum projected length. This matter produces a sweeping action as well as a "pumping" action to force the tuft filaments into a positive gripping the work surface whether it be curved or flat resulting in an effective cleaning thereof.

As in said prior patent and to enable confining of the tufts on the work surface or, for example, within the interproximal crevices for a period long enough to attain thorough cleaning, each individual tuft is reciprocally rotated. In a periodontal application, for example, this rotation is commenced in one angular direction for a distance sufficient to produce both effective energy transfer and lateral movement of the tuft across the interproximal crevice to clean both approximal (mesial and distal) surfaces, but less than the amount which would give rise to "run-out" of the tuft and expulsion from the interproximal crevice. Then each tuft is rotated in the opposite angular direction, again just far enough to produce the same cleaning results with effective energy transfer while avoiding expulsion of the tuft from the work surface whether it be flat or curved, such as in an interproximal tooth crevice.

In the periodontal application of said prior patent, and in addition to the mesial and distal surfaces noted above, each tooth has a facial and a lingual surface, all four of which define the vertical surfaces of a tooth crown. Because the gingival margins of the interproximal crevices, usually defined by the interdental papilla, and the gingival margins of the raised facial and lingual tooth surfaces between the approximal surfaces are vertically staggered, the tufts are also preferably arranged in a staggered relationship in each row of tufts. A first set of long tufts may be positioned along a first line in the brush head and a second set of shorter tufts may be positioned along a second line in the brush head generally parallel to and spaced from the first line. Within this staggered arrangement, the long tufts reach into interproximal crevices of the teeth, and the shorter tufts clean the raised face areas of the teeth near the gingival.

Another desirable characteristic of the applicant-assignees prior patented brush is that there is reduced vibratory movement of the brush head itself. Therefore, the brush head can be moved slowly and gently over the tooth surfaces and adjacent gingiva. The entire head of the brush does not oscillate, rotate, move in circular or elliptical paths, or become involved in any movement other than that imparted by the user. This characteristic is particularly important in cleaning teeth because the amount of cleaning motion that can be imparted to a moving brush head cannot be large enough to cause so-called "cheek shake" by action of the brush head in moving against the inner surfaces of the cheek.

In the dental field and for reference to prior manual and/or electric toothbrush devices, attention is brought to the following patents:

### U.S. Patent Documents

| | |
|---|---|
| 793,587 | 2,682,066 |
| 1,476,433 | 2,799,878 |
| 1,557,244 | 3,103,679 |
| 1,712,579 | 3,178,754 |
| 2,140,307 | 3,242,516 |
| 2,215,031 | 3,400,417 |
| 2,598,275 | 3,577,579 |

### Foreign Patent Documents

| | |
|---|---|
| 634,607 | 2,263,432 |
| 1,114,464 | 480,510 |
| 2,215,799 | 1,081,021 |

Accordingly, though prior automatic-type toothbrushes have been referred to by way of example, it is to be understood that these and other related problems in the cleaning of teeth also may be present in other cleaning, polishing, scrubbing or like applications. Such may be case with workpieces, such as cuticles, jewelry, housewares, or the like, particularly in cleaning applications where brush accessibility and/or brush "run-out" is a problem.

## Summary of the Invention

The present invention provides an improved cleaning device which is a modification of the aforementioned U.S. Patent No. 4,156,620. The present invention is preferably used as a periodontal device, but may be adapted for use in other cleaning, polishing, scrubbing or similar applications.

In U.S. 4,156,620 there is provided an automatic cleaning device for cleaning work surfaces. The device

EP 0 208 401 B1

includes a hollow housing having a handle member and a brush head member. The brush head member includes drive train means disposed within the brush head member, the drive train means including a power driven rack means which on reciprocation causes reciprocal, counter-rotation of adjacent tuft holding gear means. The tuft holding gear means include a train of intermeshing alternating drive and driven gear means, all the drive gear means in the train intermeshing with the rack means during full reciprocal motion of the rack means.

According to the present invention there is provided an automatic cleaning device for cleaning work surfaces comprising a hollow housing having a handle member and a brush head member, said brush head member including drive train means disposed interiority thereof, the drive train means including a power driven rack means which on reciprocation causes reciprocal, counter-rotation of adjacent tuft holding gear means characterised in that the rack means during its full reciprocal motion engages with a train of tuft holding gear means via a single tuft holding drive gear means, said train of gear means including a plurality of intermeshing tuft holding driven gear means which, during reciprocation of the rack means are given reciprocal counter-rotation by said tuft holding drive gear means without driving engagement by said rack means.

In the preferred form of the present invention, the tuft holding drive and driven gear means are characterised by a body member having a tuft receiving receptacle portion and an integral drive or driven gear portion. The drive gear portion on the drive gear means has a greater axial width than the corresponding axial width of the driven gear portion on the driven gear means, so that said rack means substantially meshes only with the drive gear portions of the drive gear means at one end and the driven gear portions drivingly mesh with one another on the opposite end.

The rack means in the preferred form of the present invention, is characterized by an elongated rack member having a plurality of laterally spaced drive teeth on opposing sides.The rack member includes guide means disposed generally intermediate the drive teeth for guiding reciprocal movement of the rack member relative to the tuft holding drive gear means.

The tuft holding drive and driven gear means are further characterized by a drive or driven gear portion, the drive gear portions of the tuft holding drive gear means being drivingly engaged by the rack means such that the tuft holding driven gear means are reciprocally counter-rotated by meshing engagement with the drive gear portions of the tuft holding drive gear means while being substantially free of driving engagement with the rack means. The tuft holding drive and driven gear means are also characterized by a tuft holding receptacle portion and an integral drive or driven gear portion, and the receptacle portion is adapted to detachably retain therein a tuft of filaments. The tufts are characterized by being comprised of a bundle of polymeric filaments, the filaments in each tuft being fused together at one end to provide a generally solid, mass-like body for detachable insertion into and out of the tuft holding receptacle portions. The tufts are disposed in at least two oppositely disposed rows on opposed sides of said rack means. The tufts in each of the rows being oriented in a generally staggered relationship relative to one another, and the adjacent tufts in each of the rows being longer and shorter, in axial length, relative to one another.

The preferred form of the present invention is characterized by top and bottom bearing members defining a cavity therebetween and adapted to receive the tuft holding drive and driven means therein, the tuft holding drive and driven gear means including drive and driven gear members, each including integral drive and driven gear portions and integral tuft holding receptacle portions. The drive and driven gear members being rotatably journaled at one end in the top bearing member with the receptacle portions extending therethrough and communicating with the exterior of the bottom bearing member and adapted to receive the tufts therein. The top and bottom bearing members define an access opening at one end communicating with the cavity and adapted to reciprocally receive the rack means therethrough. The bottom bearing member is characterized by a plurality of openings which are generally symmetrically oriented for rotatably receiving the receptacle portions of the drive and driven gear members therethrough.

The rack means of the present invention is characterized by an elongated rack member having integral rack teeth on opposite sides thereof, said rack teeth extending normally to the longitudinal axis of the rack member and including at least one integral cam-like guide portion extending substantially along the length thereof. The cam-like guide portion is adapted for camming and guiding co-action with a confronting interior surface defined by the access opening into the cavity and in one of the bearing members for maintaining alignment of the rack member during reciprocal driving movement.

In the preferred form of the present invention, the drive gear portions of the drive gear members are characterized by having an axial width greater than the corresponding axial width of the driven gear portions of the driven gear members with substantially only the upper one-half of the driven gear portions being engageable by the rack member, and with substantially the lower one-half portion engaging the associated driven gear portion of the driven gear members, whereby successive rotations of the driven gear members

4

are reciprocally counter-rotated upon meshing engagement of the driven gear portions.

The bearing members of the preferred form of the present invention are characterized by being made from a polymeric material, the top bearing member having an enlarged boss-like area adjacent one end adapted to receive the relatively enlarged axial width of the drive gear portions therein.

The handle member of the preferred form of the present invention is characterized by a battery-powered motor having a rotatable output shaft, a pinion gear means attached to the output shaft in rotary engagement therewith, a face gear means engaging the pinion means, a crank arm means pivotally and eccentrically attached at a first end to the face gear means, and a rack drive shaft means pivotally attached at a first end to a second end of the crank arm means, and connected to an end of the rack means at a second end of the rack drive shaft. A control switch assembly disposed interiorly of the handle portion including a manual switch element for selectively energizing the battery-powered motor for translating rotational movement of the face gear means into reciprocal movement of the rack means for reciprocally, counter-rotating the tufts. The rack means is characterized by an elongated rack member disposed for reciprocal movement interiorly of the brush head portion, the rack member being coupled to a drive shaft, a bearing member fixedly attached to the interior of the brush head member and having an axial passageway for slidably receiving the drive shaft therethrough, and a flexible valve member carried by the bearing member and engageable with the drive shaft adapted to provide a one-way fluid seal relative to the interior of the brush head member. The bearing member is characterized by a body member having aperture means therein , the flexible flapper-like valve member disposed adjacent one side of the base member adapted for flexibly opening and closing the aperture means in response to fluid pressure alternately exerted upon the flapper valve member in response to reciprocal movement of the rack member whereby residue materials contained in the brush head member are expelled therefrom.

The switch assembly of the preferred form of the present invention is characterized by a support for orienting the assembly within a device housing, actuator means for adjusting the speed of the motor, a switch circuit member mounted to the support, defining multiple electrical contact points coupleable to a drive motor to complete a motor energization circuit, and a switch contact biased against the circuit member and moveable with respect to the member by the actuator to short across two contact points and thereby controllably energize and de-energize the motor, the contact being moveable to at least two energization orientations. The support defines a ridge member and the assembly additionally comprises a detent member biased against the support and coupled to the switch contact, said detent member engaging said ridge member to define one or more switch contact orientations. The actuator of the switch assembly is characterized by the rotation and translation of the switch contact to control the shorting of the contact points on the switch circuit member. The support of the switch assembly is characterized by means for rotatably mounting a motor drive gear coupled to the cleaning element. The switch circuit member of the switch assembly is characterized by defining low impedance, medium impedance, and high impedance motor energization paths to provide high, medium, and low speed motor operation.

In the preferred form of the present invention, the automatic cleaning device is in combination with a support stand. The support stand is characterized by a body having a generally hollow base portion for mounting a first electrical charging means and adapted to receive a handle of the brush having a second charging means, the base portion including an integral angularly disposed tray-like portion being of a hollow construction and adapted to receive a power cable in stored relation therein, the tray-like portion including an integral upstanding bracket portion adjacent its terminal end and adapted for supporting the brush head portion of the device therein. The support stand has a generally L-shaped configuration, in side elevation, with the base portion adapted to be mounted on a horizontal work surface for mounting the tray-like support portion in a generally vertical position. The tray-like support portion is alternately adapted for detachably mounting the device on a vertical support surface with the base portion extending generally normal to the support surface, or in a horizontal position with the base portion extending normal thereto. The base portion is characterized by a female socket means adapted to receive a corresponding male socket portion of the cleaning device, a front support portion made integral with the tray-like portion and having a height so as to support the device including the brush in a downwardly inclined position for draining residue materials from the device when the stand is disposed in a generally horizontal position.

The method of the present invention is a system for loading filament tufts into the brush head of a brush-cleaning device characterized by a fixture means having a cap-like body including a plurality of generally parallel extending passageways adapted to receive, in loading relation, corresponding tufts of filaments.The body includes an integral skirt portion on one side adapted to be disposed in encompassing relation around a plurality of correspondingly oriented tuft holder means provided in the brush head. The skirt portion is disposed to register the tuft receiving passageways with the tuft holder means. A generally cylindrical ram element is adapted to be slidably received in said passageways for manually inserting tufts disposed in the passageways axially into the tuft holder means provided in the brush head.

In the preferred form of the present method the cylindrical passageways are characterized by symmetrical orientation having a diameter to frictionally yet slidably receive the tufts therein. The cleaning device of the preferred method of the present invention is characterized by a motor driven toothbrush of the type including a brush head having a plurality of filament tufts detachably mounted therein. The fixture means is characterized by a manually manipulatable handle means, the handle means including an integral guide portion having a cylindrical passageway therein which extends parallel to the first mentioned passageway for loading an individual tuft into one of the tuft holder means. The fixture means is further characterized by a kit in the form of a base member having a cavity adapted to supportingly receive therein the confronting surface of the brush head for loading tufts into the opposite side of the brush head. The integral guide portion is characterized by providing a handle for manually registering the cylindrical passageways relative to the tuft holder means, and the body provides a further handle for manually registering the cylindrical passageways of the guide portion with selective of the tuft holder means adapted for individually registering a tuft relative to selective of the tuft holder means.

Brief Description of the Drawings

Figure 1 is a front elevation view of the automatic cleaning device of the present invention;

Figure 2 is a side elevation view taken along the line 2-2 of the cleaning device illustrated in Figure 1;

Figure 3 is a vertical cross-section view of the automatic cleaning device illustrated in Figures 1 and 2;

Figure 4 is horizontal cross-sectional view of the automatic cleaning device illustrated in Figure 3;

Figure 5 is a partially-exploded, perspective view of the automatic cleaning device of the present invention particularly illustrating the drive train assembly thereof;

Figure 6 is a vertical section view taken along the line 6-6 of Figure 7, on an enlarged scale, illustrating one of the tuft holder drive gear members of the present invention;

Figure 7 is a top plan view of the tuft holder drive gear member illustrated in Figure 6;

Figure 8 is a front elevation view of the tuft holder drive gear member illustrated in Figure 6;

Figure 9 is a vertical section view taken along the line 9-9 of Figure 10, on an enlarged scale, illustrating one of the tuft holder driven gear members of the present invention;

Figure 10 is a top plan view of the tuft holder driven gear member illustrated in Figure 9;

Figure 11 is a front elevation view of tuft holder driven gear member illustrated in Figure 9;

Figure 12 is a generally perspective view of tuft units, on an enlarged scale, for detachable connection to the tuft holder receptacles of the present invention;

Figure 13 is a fragmentary, partially-sectional view, illustrating one form of the expulsion system of the present invention;

Figure 14 is a generally exploded, perspective view illustrating the component parts of the control switch assembly of the present invention;

Figure 14A is an elevational view of a printed circuit board of the type which may be used in accordance with the present invention;

Figures 15 and 16 are generally schematic illustrations showing the various control positions of the control switch assembly according to the present invention;

Figure 17 is a general horizontal section view illustrating a charger stand assembly for use in storing and/or re-charging the battery-powered cleaning device in accordance with the present invention;

Figure 18 is a fragmentary top plan view of the brush head on an enlarged scale relative to Figure 3 and 4;

Figure 19 is a side elevation view of Figure 18;

Figure 20 is a bottom plan view of the filling or re-loading fixture of the present invention;

Figure 21 is a side elevation view, partially in section, of the fixture of Figure 20;

Figure 22 is a fragmentary side elevation view, partially in section, illustrating the support base mounting the brush head during the filling or re-loading operation;

Figures 23, 24, 25 and 26 are top, end side and bottom view, respectively, of the bottom bearing member in accordance with the invention; and

Figures 27, 28, 29 and 30 are top, end side and bottom views, respectively, of the top bearing plate in accordance with the invention.

Detailed Description

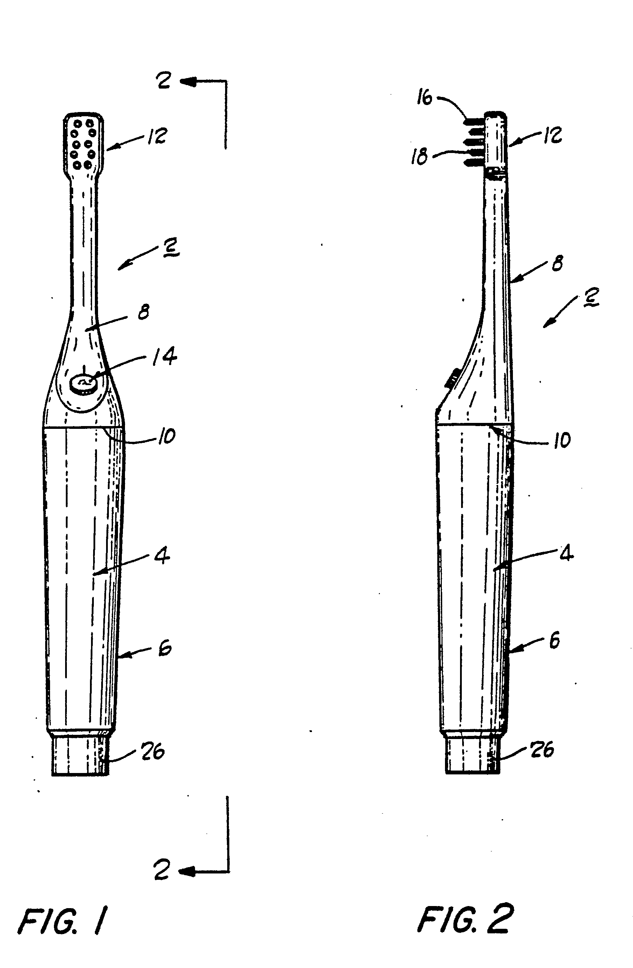

Referring now again to the drawings, and more particularly to Figures 1 and 2 thereof, there is illustrated the automatic cleaning device, designated generally at 2, of the invention, and which is adapted for use as a portable, hand-held device for cleaning, polishing, scrubbing or the like.

Though such device may be used for other various cleaning applications, it has been found to be particularly effective as a motor driven, tooth brush for removing debris and plaque from exposed tooth surfaces. Such cleaning application is disclosed in applicant-assignees prior U.S. Patent No. 4,156,620, the disclosure of which is specifically incorporated herein by reference.

In the embodiment shown, the cleaning device 2 is illustrated for particular application as a motor driven tooth brush, and includes a hollow housing, as at 4, having a handle member 6 with a male re-charger portion 26, and a brush head member 8 which may be attached together in sealed relation via a washer seal, as at 10. At one end the brush head member 8 includes an integral brush head portion 12, and at the other end a switch assembly, designated generally at 14. The brush head portion 12 further includes a plurality of tufts 16 and 18 which are reciprocably, counter-rotated by the new and improved drive train assembly, as will hereinafter be more fully described.

In the embodiment illustrated, the tufts are preferably made from a polymeric material, such as nylon, and include a series of longer 16 and shorter 18 tufts which may be disposed, in two rows (Figure 1) with there being, for example, six long tufts and four short tufts. These long and shorts tufts are preferably disposed in a staggered orientation along the brush head portion 12 to provide improved cleaning in periodontal use, for example, of the interproximal tooth crevices, as disclosed in afore-mentioned U.S. Patent No. 4,156,620.

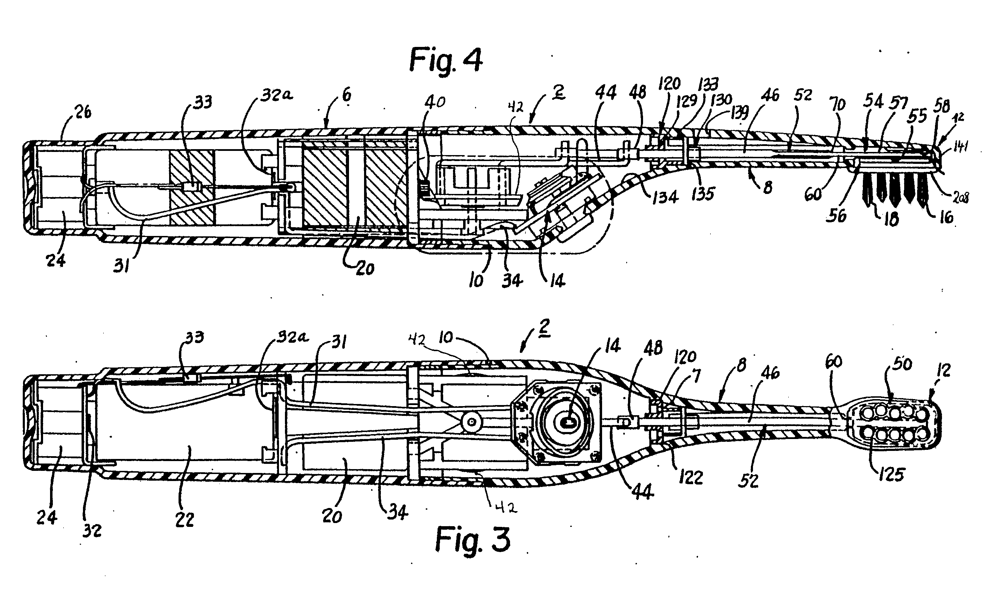

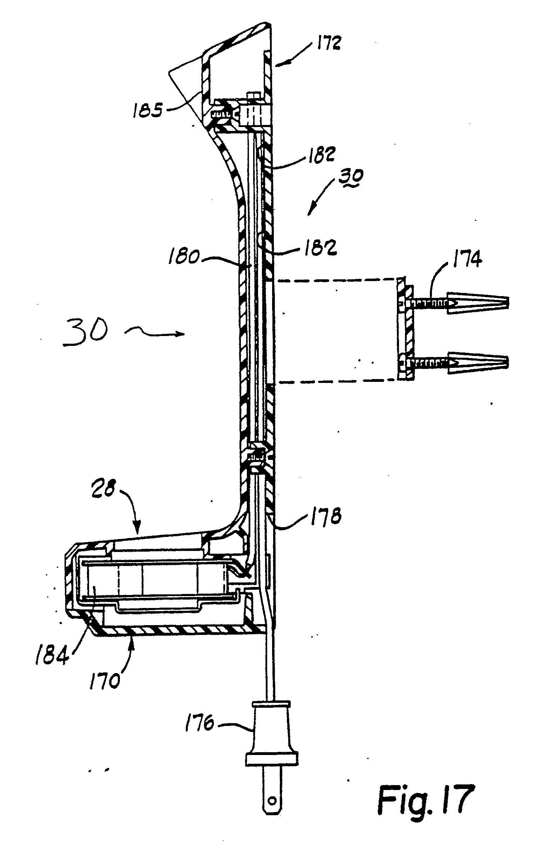

As best illustrated in Figures 3 and 4, a drive motor 20 is powered by a battery pack 22, which may be of the nickel cadmium type for ready charging via a secondary voltage coil 24 incapsulated in an integral male socket portion 26 of the handle portion 6. This socket portion 26 is detachably received in a corresponding female socket portion, as at 28 in Figure 17, provided in a charger base assembly 30 having a primary charging coil. An electrical circuit is defined with one side of the secondary coil 24 attached to a negative battery terminal connector 32 (Figure 4). The other side of the secondary coil 24 is coupled through a diode 33 to the positive battery terminal 32a. The diode rectifies voltage outputs from the coil 24.

A second electrical circuit includes the battery 22, motor 20 and switch 14. The negative battery terminal 32 is coupled to the switch 14 by a conductor 31. This switch 14 selectively energizes the motor 20 by coupling the battery 22 across the motor. A conductor 34 completes the circuit by connecting the switch to the motor 20. An opposite side of the motor is connected to the positive battery terminal.

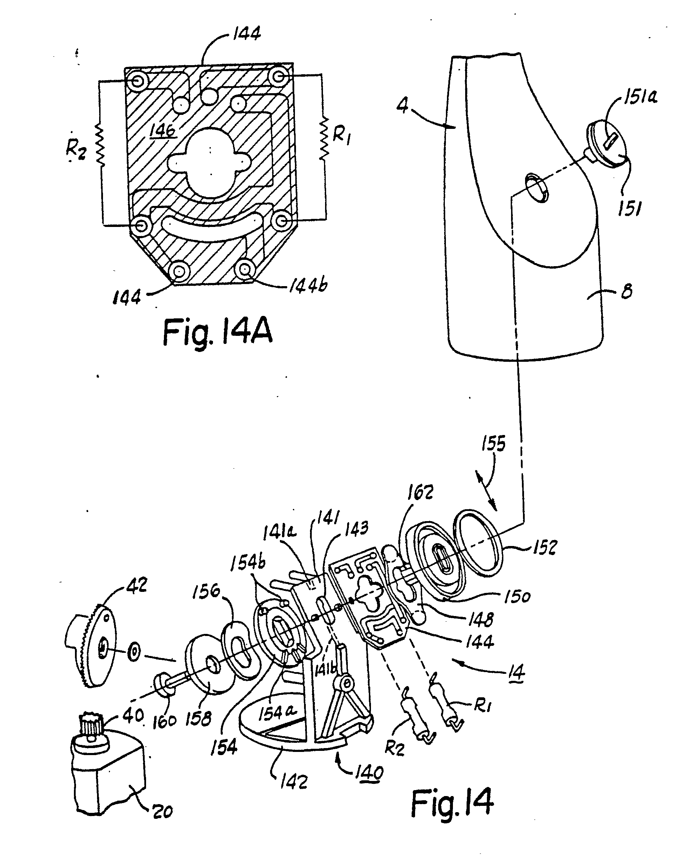

In the present invention, a transmission is energized by the power source and includes a pinion gear 40 (Figure 3) operatively associated with the output shaft 41 (Figure 14) of the motor 20. The pinion gear 40 drives a crown or face gear 42 (Figures 3 and 4) which is rotatably mounted within the handle portion 6 such that when the motor 20 is energized, rotation of the pinion 40 causes rotation of the face gear 42 about a vertical axis which is generally normal to the longitudinal central axis of the housing 4.

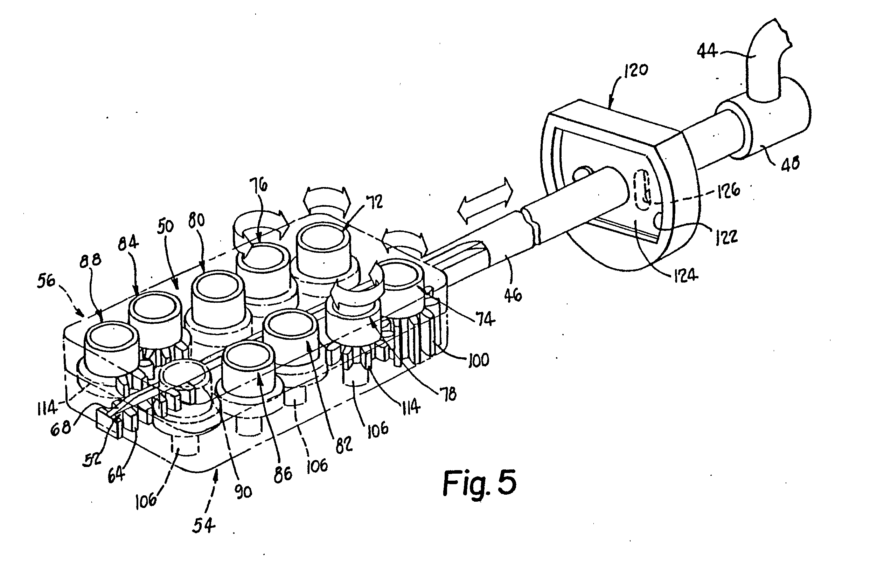

As best illustrated in Figures 4 and 5, a crank arm or rod 44 is pivotly connected to a rack drive shaft 46 by means of a swivel member 48. By this arrangement, the drive train assembly, designated generally at 50, (Figures 3, 4 and 5) transmits the mechanical energy via the power transmission to the series of tufts 16 and 18 in a controlled, reciprocating manner so that the rotation of the tufts is reversed after a predetermined number of revolutions. Also, the tufts are counter-rotated, that is, adjacent tufts rotate in opposite directions relative to one another, as illustrated by the arrows in Figure 5.

More specifically, the rotational movement of the crown or face gear 42 is transferred into linear reciprocating motion via the drive train assembly 50 (Figure 5) for counter-rotating the tufts 16 and 18 about their vertical axes. For this purpose, one end of the crank arm 44 is operatively connected to one end of the face gear 42 which connection is radially displaced from the central axis of the face gear and the rack drive shaft 46. This connection, via the swivel 48, acts such that the drive shaft 46 will be caused to move in linearly reciprocating cycles (dotted line) along its longitudinal axis when the motor unit 20 (Figure 4) is energized. This reciprocating motion results from the action of the crank arm 44 moving in a circular path defined by movement of the face gear 42. The length of stroke defined in reciprocating movement of the rack drive shaft 46 is a function of the radial distance between the center of the face gear 42 and the central point of attachment of the crank arm 44 to the face gear, as disclosed in aforementioned U.S. Patent No. 4,156,620. Preferably, this stroke, for periodontal applications, is approximately 0.7 inches (1,79cm).

Now in accordance with an important aspect of the present invention, the drive train assembly 50 includes an elongated rack member 52 which may be made integral with the rack drive shaft 46 for reciprocal movement between top 54 and bottom 56 bearing members (Figure 5 being reversed from Figure 4 for purpose of clarity) which are preferably made from a polymeric material having good strength and wear characteristics. As best seen in Figures 3, 4, 18 and 19 the rack member 52 extends through a

7

cavity, as at 58, defined between the confronting faces of the bearing members 54 and 56. An access opening, as at 60, may be provided on the rearward end between the bearing members 54, 56 to slidably receive the rack member 52. The opposite ends of the bearing member provide an access opening, as at 62, to enable the terminal end of the rack member 52 to extend slightly beyond the bearing members 54 and 56 during the maximum stroke thereof, as desired. The bearing members 54 and 56 may be detachably connected together by means of integral pins 61 received in pin holes 63.

The rack member 52 is of an elongated, unitary construction, including a plurality of oppositely disposed and laterally spaced rack teeth 64, which are disposed in the same generally horizontal plane. The rack member 52 includes integral, cam-like guide portions 66 which extend laterally outward therefrom and generally normal to the rack teeth 64. These guide portions 66 have inclined surfaces, as at 68, at each of the forward ends (Figure 5) so as to facilitate insertion into and out of the access opening 60 (Figures 3 and 4) provided between said bearing members 54 and 56. As best illustrated in Figure 3, the rearward end of the rack member 52 has inclined shoulders, as at 70, which provide a stop for limiting forward axial reciprocal movement of said rack member, as desired.

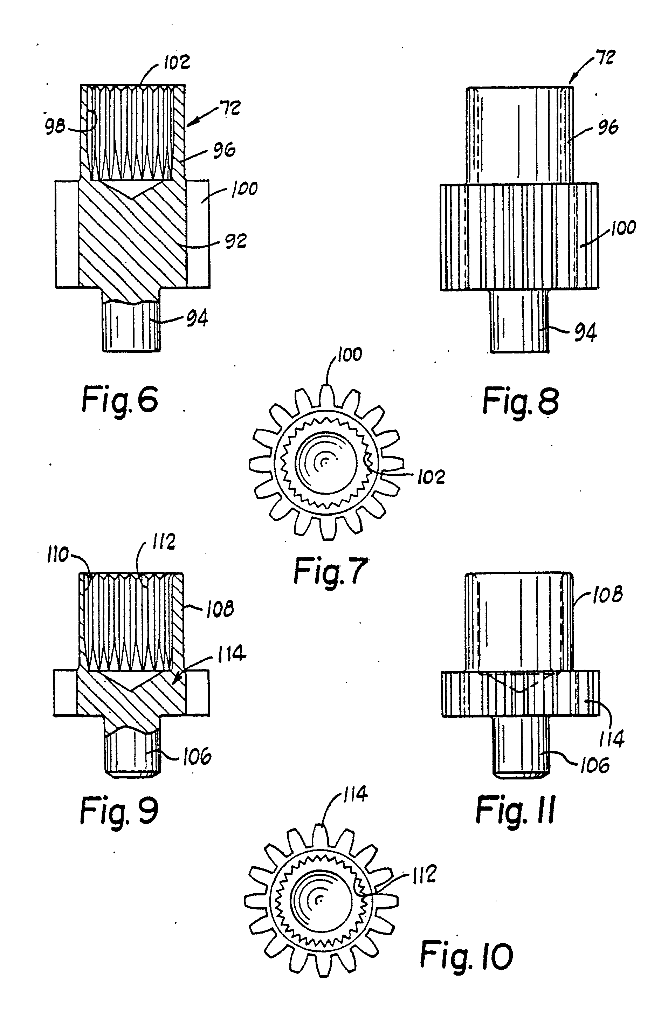

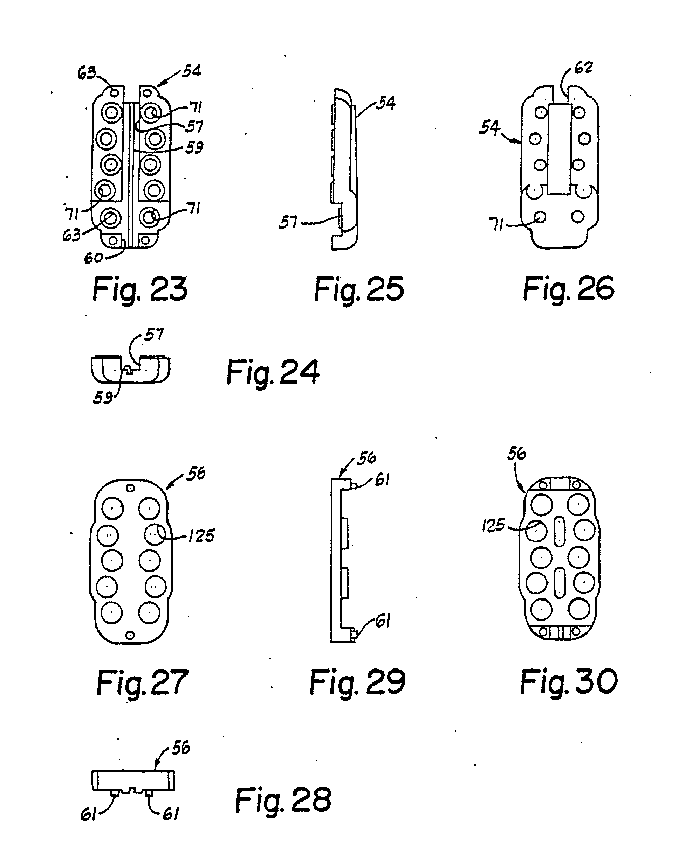

Now in accordance with the invention, the rack member 52 engages an oppositely disposed pair of tuft holder drive members 72 and 74 which, in turn, drive a series of tuft holder driven gear members generally designated at 72, 74, 76, 78, 80, 82, 84, 86, 88 and 90 respectively. The tuft holder drive gear members 72 and 74 are of identical construction and best illustrated in Figures 6, 7 and 8. As shown, each tuft holder drive member, as at 72, includes an elongated cylindrical body 92 having an integral, solid journal end portion 94 adapted to be journaled within a bearing opening 71 (Figures 23 and 26) provided in the top bearing member 54, and an integral receptacle-like portion 96 defining a cup-like recess for slidably receiving in press-fit relation therein, the tufts 16, 18. Disposed generally intermediate the end portions 94 and 96 is an integral series of drive gear teeth, as at 100, for driving engagement with the driven gears, as will be described hereinafter. Preferably, the interior of the receptacle portion 96 may be axially serrated, as at 102, to enhance the frictional engagement for retaining the respective tufts therein.

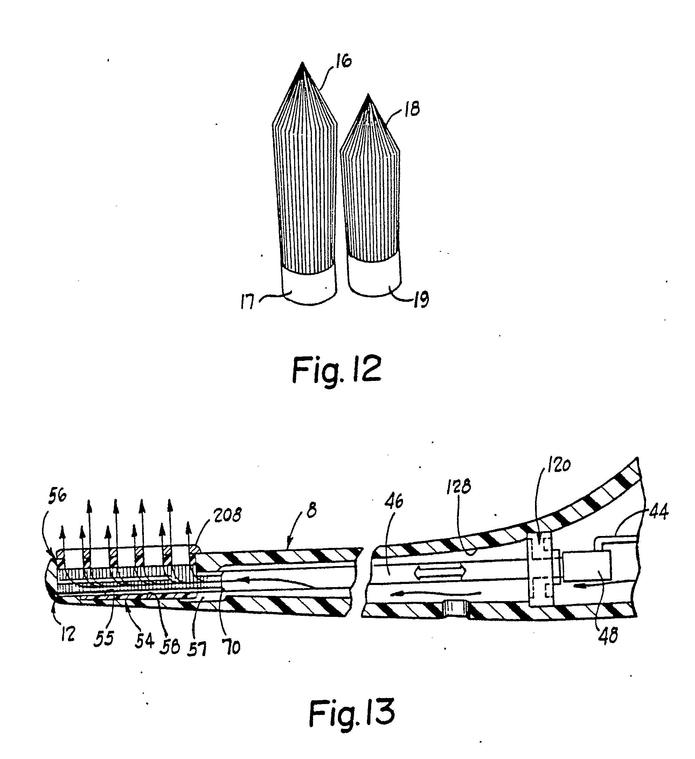

As best illustrated in Figures 3, 13, 23 and 26, the bearing members 54, 56 provide mating halves which define a cavity, as at 55, therebetween. This cavity houses the drive train 50 and slidably receives there through the rack member 52. The bearing members 54, 56 together define at one end a generally inverted T-shaped recessed portion 60 adapted to slidably receive there though the corresponding guide portions 66 on the rack member 52. The top bearing member 54 has a recessed slot and groove extending axially therethrough, as at 57 and 59, which provide cam-like track for the upper guide portions 66 on the rack member 52. By this arrangement the rack member 52 is guided into and through the recessed slot 57 in the cavity 55 between the bearing members so as to maintain alignment and registration with the respective drive and driven gears of the gear train. Also, it will be seen that the upper or top bearing member 54 (Figures 3 and 13) has an enlarged boss portion 57 to receive the approximate upper one-half of the tuft holder drive gears 72 and 74, as will hereinafter be described.

The bearing members are preferably made from a polymeric material having good strength and wear characteristics. These members may be detachably connected together via integral pins 61 and pin hole openings 63 (Figures 24, 25 26 and 27) to provide an efficient snap-action between the component parts for ready assembly or disassembly for inspection, cleaning and/or removal of the drive train components.

The respective tuft holder driven gear members, as at 76, are also of an identical construction and generally similar to the tuft holder drive gear members. These each include a body having an integral journaled portion 106, and an integral receptacle portion 108 defining a cup-like recess opening 110 having axial serrations 112 therein, as aforesaid. In this case, however, the driven gear members have integral driven gear teeth, as at 114, which are fore-shortened in axial width relative to the corresponding axial width of the drive gear teeth 100 of the drive gear members. Preferably, the axial width (e.g. 0.120 inches (0.305cm) of the gear teeth 100 on the drive gear members is approximately twice the corresponding axial width (e.g. 0.050 inches (0.127cm) of the gear teeth 114 on the driven gear members. By this construction and arrangement, the teeth 64 of the rack member 52 engage the approximate top one-half portion of the drive teeth 100 on the drive gear members 72 and 74 and hence, do not engage the downstream driven gear members 76-90. The approximate lower one-half portion of the drive gears 100 of the drive gear members 72 and 74 then substantially simultaneously mesh with the first adjacent pair 76 and 78 of the driven gear members which then, in turn, drive, in piggy-back relation, the next successive driven gear members 80-90.

Accordingly, by this arrangement it will be seen that substantially all the torque load forces imparted by reciprocal movement of the rack member 52 are borne only the gear teeth 100 on the drive gear members 72 and 74 which constitute, in effect, the working end of the drive train assembly. Also, this drive train construction allows relative rotation of the downstream, piggy-back driven gears as the train need only be driven by one or more drive gears merely with the rack member 52.

In the invention, it is preferred that the axial width of the gear teeth 100 on the drive gear members 72 and 74 be approximately twice the axial width of the driven teeth or such that the axial width of the driven gear teeth extends to approximately the mid-point (Figure 13) of the drive teeth 100 on the driven gear members 72 and 74. Also, it is preferred that the transverse width of the rack teeth 64 be the same (e.g. 0.050 inches (0.127cm) the corresponding axial width of the driven gear teeth 114 but less than the corresponding axial length of the drive gear teeth 100 as best illustrated in Figure 19.

In a preferred form of the invention, there are hereinafter set forth the typical mechanical characteristics for the drive gears, driven gears, and drive rack:

### Drive Gears

| | | |
|---|---|---|
| No. of Teeth | 14 | |
| Diametral Pitch | 96 | |
| Pitch Dia.(Theo) | .14583 | (0.3704cm) |
| Pressure Angle | 20° | |
| Whole Depth | .0269 | (0.0683cm) |
| Cir.Tooth Thickness | .0175/.0170 | (0.0444/0.0432cm) |
| Chordal Addendum | .0149 | (0.0378cm) |
| Fin.Chordal Thickness | .0175/.0170 | (0.0444/0.0432cm) |
| Base Circle Dia. | .13704 | (0.3481cm) |
| Center Distance | .1500 | (0.3810cm) |
| No. of Teeth in Mate | 14/Rack | |
| Face Width | .120 | (0.3048cm) |

### Driven Gears

| | | |
|---|---|---|
| No. of Teeth | 14 | |
| Diametral Pitch | 96 | |
| Pitch Dia. (Theo) | .14583 | (0.3704cm) |
| Pressure Angle | 20° | |
| Whole Depth | .0269 | (0.0683cm) |
| Cir.Tooth Thickness | .175/.0170 | (0.0444/0.0432cm) |
| Chordal Addendum | .0149 | (0.0378cm) |
| Fin.Chordal Thickness | .0175/.0170 | 0.0444/0.0432cm) |
| Base Circle Dia. | .13704 | (0.3481cm) |
| Center Distance | .1500 | (0.3810cm) |
| No. of Teeth in Mate | 14 | |
| Face Width | .050 | (0.127cm) |

## Drive Rack

| No. of Teeth | 25 | |
|---|---|---|
| Diametral Pitch | 96 | |
| Pitch Plane | .0381 | (0.0968cm) |
| Pressure Angle | 20° | |
| Whole Depth | .0269 | (0.0683cm) |
| Cir. Tooth Thickness | .0154/.0164 | (0.0391/0.0416cm) |
| Chordal Addendum | .0104 | (0.0264cm) |
| Fin. Chordal Thickness | .0154/.0164 | (0.0391/0.0416cm) |
| Base Circle Dia. | -- | |
| No. of Teeth in Mate | 114 | |
| Face Width | .050 | (0.127cm) |

Because of the controlled reciprocating linear movement of the drive rack member 52, each tuft 16 or 18 is rotated in a controlled reciprocating manner for a predetermined cycle. Reciprocating movement in one direction of one and one-half times the base circumference of each tuft is chosen in the preferred embodiment. By this arrangement, each tuft is rotated first one and one-half revolutions in one direction and then approximately one and one-half revolutions in the opposite direction. It is to be understood, however, that the amount of reciprocating rotation may vary in accordance with the diameter of the filaments in each tuft, the length and diameter of each tuft, etc., as desired. The desirable speed for operation of the reciprocating rack 52 for periodontal applications, for example, may be approximately 1,500 cycles per minute with one and one-half revolutions in each direction per cycle. In such case, the tufts rotate at approximately 4,500 effective revolutions per minute.

As best illustrated in Figures 3, 4 and 12, the tufts 16 and 18 may be alternately arranged into staggered rows of long and short tufts. In a preferred form, the long tufts 16 in each row are indented or positioned closer to the longitudinal axis of the brush head portion 8 than the short tufts 18 in each row. Both the short and long tufts have tapered upper surfaces, defined by the tips of the filaments of each tuft. The tapered configuration of the tufts facilitates penetration into recessed cavities or interproximal crevices, in the case of dental applications. Each tuft is comprised of a plurality of filaments having a predetermined diameter and physical characteristics, so that the desired cleaning action will be realized with the rotational tuft movement of the present invention. For example, each tuft may have a diameter of approximately 0.090 inches and may contain hundreds of filaments, as desired.

As best seen in Figure 12, the long and short tufts 16 and 18 are made from a polymeric material, such as nylon fused together at one end, as at 17 and 19, to provide a generally solid, mass-like base portion. This portion may be press-fit, for example, into the respective receptacle portions, as at 96 and 108, of the respective drive and driven gear tuft holder members 72-90 to facilitate insertion and registration of the tufts within the corresponding tuft holder receptacle.

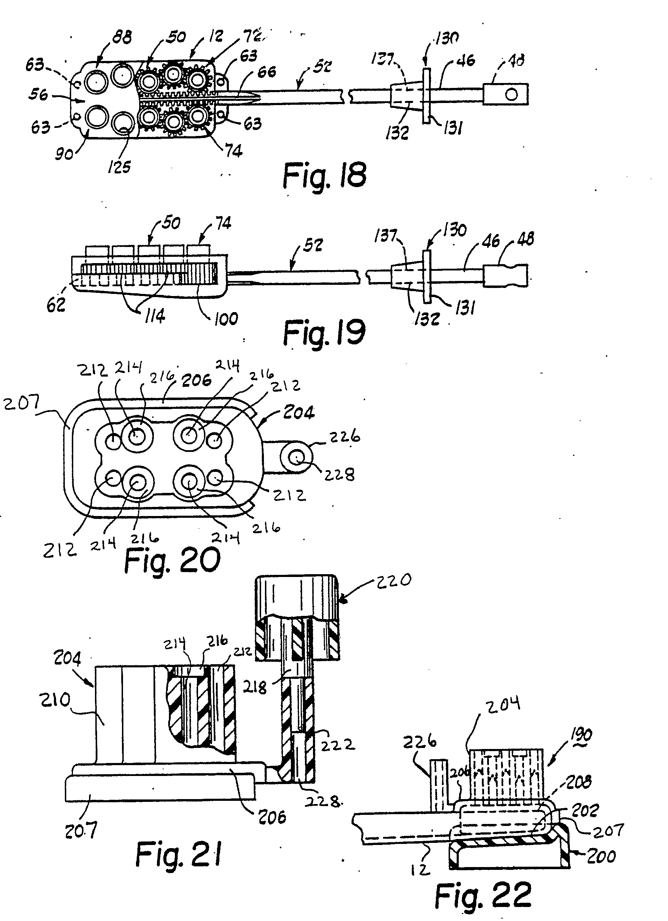

Now in accordance with one embodiment of the invention, there is provided the pneumatic system for cleansing via a pumping action residue materials, such as tooth paste or the like, from the brush head portion 12 and particularly from the drive train 50. In this embodiment, the system includes a bearing drive member 120 which is preferably made from a polymeric material and which is fixably attached to the interior of the housing 4, as best illustrated in Figures 3, 4 and 5. This bearing member 120, receives therethrough the drive rack member 52 and provides a bearing support therefor. In the embodiment illustrated in Figure 5, the bearing member 120 is provided with a recessed cavity, as at 122, which fixably mounts a flexible flapper valve member 124. The valve member is preferably made from a polymeric material, such as MYLAR, a trademark material of the DuPont Company. The flapper valve 124 is fixably attached to the bearing member 120 by means of a suitable fastener, as at 123, and has an aperture, as at 126, to enable ingress and egress of pneumatic pressure (e.g. air) therethrough. Accordingly, upon the rearward stroke of the rack drive shaft 46 and hence, the rack member 52, the flapper valve member 124 opens so as to draw air into the interior of the housing, as at 128, of the brush head portion 8. Upon reverse movement of the drive rack shaft 46 the valve 124 closes. This provides a pumping action upon forward movement of the rack member 52 which acts to force air out of the cavities 58 and 128 through suitable openings provided through and/or around the tufts 16 and 18 a clearance space, as at 125 (Figure 18), between the tuft holders and the confronting surface of the lower bearing member 56, as illustrated by the arrows in Figure 13. This pumping action provides a positive pressure in the drive train cavity 58 so that any residue material, such as tooth paste or the like, is flushed out after normal usage thereof.

In another embodiment, and best illustrated in Figures 3, 4, 18, and 19, the bearing member 120 is again fixably mounted interiorly of the housing 4 and in this form does not include the flexible flapper valve 124. Here a flexible seal member 130 having a base-like wiper portion 131 and an integral forward extending tapered conical portion 132 is fixably retained in the housing 4 against an integral elongated, hollow hub portion 133 of the bearing member 120. In this case, the base-like wiper portion 131 is frictionally retained against the confronting interior surface of the housing 4, as at 135, such that the drive shaft 46 is slidably passed through a passageway, as at 137, provided in the base 131 and conical portions 132 of the flexible seal, as seen in Figures 18 and 19. The base-like wiper portion 131 provides a friction, liquid seal against the confronting surface of the hub portion 133 so as to prevent the ingress of liquid behind the drive shaft 46 into the power handle of the device. As shown in Figure 4, the bearing member 120 may have one or more apertures therein, as at 129, to prevent the formation of a vacuum behind the wiper seal 131 during reciprocal movement of the drive shaft 46. Also, in this embodiment the brush head portion 12 may be provided with outlet openings, as at 139, just forward of the wiper seal, and in the brush head portion, as at 139, to allow the ingress of a cleansing media, such as hot water or the like, therethrough. Accordingly, in this embodiment the liquid cleansing fluid may be poured into the openings 139 and moved axially through the brush head portion 12 via gravity and/or the pumping action of the drive shaft 46, and out through openings 141 for cleansing the drive train 50 within the brush head portion 12.

Now in the invention, and as best illustrated in Figures 3, 4, 14 and 14A, a new and novel control switch assembly 14 is detachably mounted on an interior wall surface 134 of the brush head portion 8 of the housing 4. As illustrated in Figure 14, the components of the switch assembly 14 include a frame member 140 with an integral base portion 142. The frame includes an integral upper inclined support portion 141, having an aperture 143 extending therethrough and adapted to support a printed circuit board 144 thereon. This circuit board 144 contains a suitable contact switch circuit, as 146 (Figure 14A), for actuation by a spring contact 148 retained by a switch body 150 via an O-ring seal 152. On the under side of the support portion 141 of the frame 140 is a detent 154 retained by a spring washer 156. This, in turn, is retained by a washer 158, retained by a screw 160, which may be threaded into a threaded collar 162 made integral with the switch body 150.

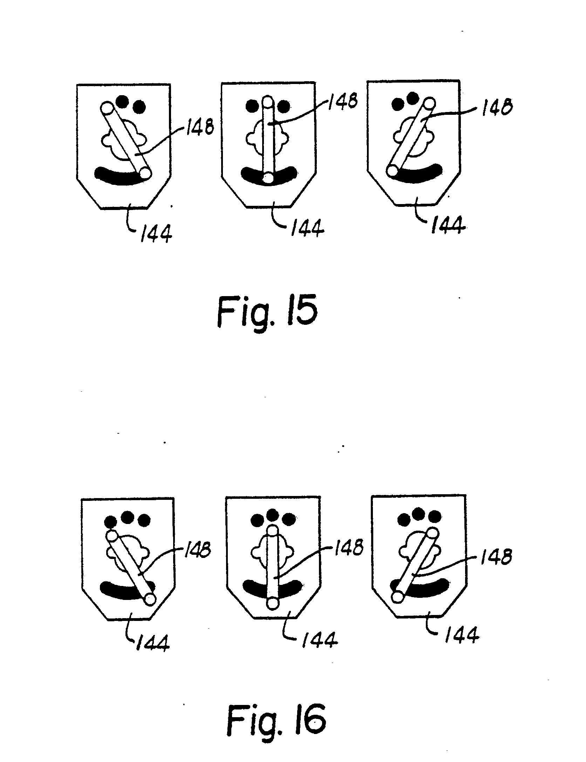

The switch contact 148 is slightly bowed away from the switch body 150. As the screw 160 is threaded into the collar 162, the combination of the spring washer 156 and the bowed configuration of the contact 148 bias the contact against the printed circuit board 144. Details of the print circuit board 144 are illustrated in Figures 15, 16 and 14A. The contact 148 is schematically illustrated in various positions selected by the user. In the three positions shown in Figure 16, the motor 20 has been deactivated by opening the circuit between two circuit connections 144a, 144b.

Turning now to Figure 15, contact positions for energizing the motor are illustrated. The user can rotate the switch body 150 by a button 151 that engages the body 150 through the housing. The button defines a slot 151a therein to facilitate rotation of the contact 148 to the three positions shown in Figure 15. In the position shown to the right of Figure 15, the configuration of the switch 14 couples the motor 20 directly across the battery. In the two other positions shown in Figure 15, the switch 14 selectively adds one of the resistors R1, R2, into the motor circuit to reduce the motor speed. Representative values for the resistors R1, R2 are .1 and .22 ohms with the larger resistance R2 providing low speed motor operation. Details of the contact points on the printed circuit 144 are shown in Figure 14A.

A detent action is provided by the detent 154 in combination with the incline support portion 141. A surface of the incline portion 141 facing the detent defines two ridges 141a, 141b shown in phantom in Figure 14. A corresponding face of the detent 154 defines a series of grooves 154a that engage a bottom ridge 141b to lock the switch contact in one of the positions shown in Figures 15 and 16. When the motor is to be switched from high to medium speed, the user rotates the button 151 causing the ridge 141b to ride up over the groove into an adjoining groove and again lock the switch in place. By slidably moving the switch body 150 in the direction illustrated by the arrow 155 in Figure 14, the motor can be turned on and off. The ridge 141a provides a detent action to the on and off motion of the switch by engaging an edge of the detent between two bosses 154b. The bosses 154b in the detent switch 154 limit rotation of the switch body so that in the event the user attempts to rotate the button 151 beyond either the high speed or low speed position, continued rotation is prevent by contact of these bosses 154b with the ridge 141a on the incline frame portion 141.

The novel construction of the switch and frame allow the user to adjust the motor speed in either an off or on position. The detent and motion limiting aspects of the switch assembly insure proper switch setting and prevent unintended movement of the switch during motor operation. The use of the frame as both a support for the switch and a mounting for the motor drive train contributes to a compact construction for the cleaning device 2.

Now in Figure 17 there is illustrated a charger support stand assembly 30 which includes the aforementioned female socket 28 for receipt of the male socket portion 26 of the cleaning device for purpose of recharging the batteries 22 of the power supply. As shown, the charger assembly 30 is of a generally L-shaped configuration having a hollow base portion 170 and an integral upstanding, hollow back support portion 172 for detachable connection to a supporting wall or the like (not shown) via suitable fasteners, as at 174. The charger includes a conventional power cord 176, which may be inserted through an inlet opening 178 and wound around a bracket retainer 180 mounted within an interior cavity 182 formed in the back support 172. The base portion 170 includes a primary bobbin 184 for supporting a primary coil for energizing the secondary coil assembly 14 disposed in the handle portion 6 of the cleaning device, as illustrated in Figures 3 and 4.

The support stand 30 has a generally L-shaped configuration which enables multiple storage and/or use positions thereof. For example, the base portion 170 allows the stand to be freely mounted on a work surface, such as a counter or the like, and the back support portion 172 enables the stand to be hung, for example, on a support surface such as a wall or the like. Also, the stand is constructed and arranged such that the cleaning device can be placed in a draining mode for draining residue materials from the brush head member 9. Specifically, with the male socket portion 26 mounted in the female socket 28 of the base portion 170 of the stand and the brush head portion 12 mounted on a forward support surface of an integral head portion 185 of the stand, the housing 4 of the cleaning device 12 is inclined slightly downwardly from the rear to the front to provide constant drainage through the outlet opening 141 provided in the brush head portion 12.

Now as best illustrated in Figures 20, 21 and 22, there is illustrated a new and novel filling or reloading kit, designated generally at 190, for filling or re-loading the tufts filaments 16 and 18 into the respective tuft holder members of the associated drive and driven gears. As shown, the kit includes a base member 200 having a support recess 202 which is contoured to receive the confronting surface of the brush head portion 12. This base member provides a support for the brush head portion and acts to prevent sliding and/or rotational movement thereof during filling or re-loading of the tufts. A cap-like fixture member 204 is provided which has a bottom skirt-like portion 206 defined by an integral flange 208 which set over and around a corresponding cover member 208 mounted over and around the lower bearing member 54, illustrated in Figures 3 and 13. The cap member 204 includes an upper body portion 210 which has a plurality of generally symmetrically oriented , cylindrical passageways of a longer 212 and a shorter 214 construction for receiving the tufts 16 and 18 therein. The passageways are disposed in substantially parallel relationship with respect to one another and provide guides for inserting the tufts contained therein into the respective tuft holders of the associated drive and driven gear members. As illustrated, the shorter cylindrical passageways have a counter-sunk portion, as at 216, to receive a correspondingly shaped integral collar member 218 formed on a manual tamper member 220. The tamper member 220 includes an elongated, cylindrical tamper element 222 for tamping the respective tufts through the cylindrical passageways and into the tuft holders, as aforesaid. In one form, the tamper element may have a generally conical recessed cavity, as at 224. to receive the corresponding tapered end of the respective tuft or may simply have a generally flat configuration, for example, in the case of tufts which are trimmed flat. It will be understood that the cap member may have any array or number of cylindrical passageways to accommodate the various size and arrangement of the tufts to be utilized in accordance with the invention for a particular cleaning application.

As illustrated, a cap member may include an integral upstanding guide portion 226 which includes another cylindrical passageway 228 which extends parallel to the aforementioned passageways 212 and 214 for insertion and dispensing another single tuft therefrom. This guide portion also provides a handle for manually manipulating the cap member thereby to orient the axial passageways relative to the corresponding tuft holder receptacles. For example, in use, the guide portion 226 can be used as a hand le for registering the other cylindrical portions, or the body 210 defining such cylindrical portions can be used as a handle for registering the single guide portion when it is desired to replace, for example, only one of the tufts relative to the desired tuft array. Accordingly, this kit provides upper and lower base and cap members which may be effectively utilized, in combination, with the cleaning device for filling or reloading tufts, of any configuration, orientation or size, into the associated tuft holders.

While a particular embodiment of the invention has been shown and described in reference to a periodontal cleaning device, it is to be understood that the principles involved with respect to the construction and function of such device can be effectively utilized in other cleaning, polishing, scrubbing or like applications where relatively small inaccessible parts having curved and or flat surfaces are to be cleaned.

**Claims**

1. An automatic cleaning device (2) for cleaning work surfaces comprising a hollow housing (4) having a handle member (6) and a brush head member (8), said brush head member including drive train means (50) disposed interiority thereof, the drive train means including a power driven rack means (52) which on reciprocation causes reciprocal counter-rotation of adjacent tuft holding gear means characterised in that the rack means (52) during its full reciprocal motion engages with a train of tuft holding gear means (72,76,80,84,88) via a single tuft holding drive gear means (72), said train of gear means including a plurality of intermeshing tuft holding driven gear means (76,80,84,88) which, during reciprocation of the rack means, are given reciprocal counter-rotation by said tuft holding drive gear means without driving engagement by said rack means.

2. An automatic cleaning device as recited in Claim 1, wherein said tuft holding drive and driven gear means are characterised by:
a body member (92) having a tuft receiving receptacle portion (96,108) and an integral drive or driven gear portion (100,114);
the drive gear portion (100) on said drive gear means having a greater axial width as compared to the corresponding axial width of said driven gear portion (114) on said driven gear means;
so that said rack means (52) substantially meshes only with the drive gear portions (100) of said drive gear means at one end thereof and said driven gear portions (114) drivingly mesh with one another.

3. An automatic cleaning device as recited in Claim 1 or 2 wherein said rack means is characterised by:
an elongated rack member (52) having a plurality of laterally spaced drive teeth (64) on opposed sides thereof;
said rack member including guide means (66) disposed general intermediate said drive teeth for guiding reciprocal movement of said rack member relative to said tuft holding drive gear means (72).

4. An automatic cleaning device as recited in Claim 1,2,3 or 4 wherein said tuft holding drive and driven gear means are characterised by:
a drive or driven gear portion, the drive gear portions (114) of said tuft holding drive gear means being drivingly engaged by said rack means (52) such that said tuft holding driven gear means (76) are reciprocally counter-rotated by meshing engagement with the drive gear portions (100) of the tuft holding drive gear (72) means while being substantially free of driving engagement with said rack means.

5. An automatic cleaning device as recited in any preceding claim wherein said tuft holding drive and driven gear means are characterised by:
a tuft holding receptacle portion (96,108) and an integral drive or driven gear portion (100,114);
said receptacle portion being adapted to detachably retain therein a tuft of filaments (16,18).

6. An automatic cleaning device as recited in Claim 5, wherein said tufts (16,18) are characterised by:
a bundle of polymeric filaments comprising said tufts;
said filaments in each tuft being fused together at one end to provide a generally solid, mass-like body (17,19) for detachable insertion into and out of said tuft holding receptacle portions (96,108).

7. An automatic cleaning device as recited in Claim 5 or 6 characterised by:
said tufts (16,18) being disposed in at least two rows disposed on opposite sides of said rack means

13

(52);

the tufts in each of said rows being oriented in a generally staggered relationship relative to one another; and

the adjacent tufts in each of said rows being longer and shorter, in axial length, relative to one another.

8. An automatic cleaning device as recited in any preceding Claim characterised by:

top and bottom bearing members (54,56) defining a cavity (58) therebetween and adapted to receive said tuft holding drive and driven means therein;

said tuft holding drive and driven gear means including drive and driven gear members (72,76), each of said drive and driven gear members including integral drive and driven gear portions (100,114) and integral tuft holding receptacle portions (96,108);

said drive and driven gear members being rotatable with said receptacle portions extending therethrough and communicating with the exterior of said bottom bearing member (56) and adapted to receive said tufts therein.

9. An automatic cleaning device as recited in Claim 8, characterised by:

top and bottom bearing members (54,56) defining an access opening (62) at one end communicating with said cavity, said access opening being adapted to reciprocally receive said rack means (52) therethrough.

10. An automatic cleaning device as recited in Claim 9, wherein said bottom member (56) is characterised by:

a plurality of openings which are generally symmetrically oriented for rotatably receiving the receptacle portions (96,108) of said drive and driven gear members therethrough.

11. An automatic cleaning device as recited in Claim 10, wherein said rack means is characterised by:

an elongated rack member (52) having integral rack teeth (64) on opposite sides thereof;

said rack teeth extending normal to the longitudinal axis of said rack member and including at least one integral cam-like guide portion (66) extending substantially along the length thereof;

said cam-like guide portion adapted for camming and guiding co-action with a confronting interior surface defined by the access opening (62) into said cavity (55) and in one of said bearing members (54,56) for maintaining alignment of said rack member during reciprocal driving movement thereof.

12. An automatic cleaning device as recited in Claim 11 wherein the drive gear portions (100) of said drive gear members are characterised by:

an axial width greater than the corresponding axial width of the driven gear portions (114) of said driven gear members with substantially only the upper one-half of said drive gear portion being engageable by said rack member (52);

with substantially the lower one-half of said drive gear portion (100) engaging the associated driven gear portion (114) of said driven gear members;

whereby successive reciprocal rotations of said drive gear members cause reciprocal counter-rotations of said driven gear members.

13. An automatic cleaning device as recited in Claim 12, wherein said bearing members (54,56) are characterised by:     being made from a polymeric material;

said top bearing member (54) having an enlarged boss-like area (57) adjacent one end adapted to receive the relatively enlarged axial width of said drive gear portions (100) therein.

14. An automatic cleaning device as recited in any preceding claim wherein the handle member is characterised by:

a battery-powered motor (20) having a rotatable output shaft (41);

a pinion gear member (40) attached to said output shaft in rotary engagement therewith;

a face gear means (42) engaging said pinion means;

a crank arm means (44) pivotally and eccentrically attached at a first end to said face gear means;

a rack drive shaft means (46) pivotally attached at a first end to a second end of said crank arm means, and connected to an end of said rack means at a second end of said rack drive shaft.

14

**15.** An automatic cleaning device as recited in Claim 14, characterised by:

a control switch assembly (14) disposed interiorly of said handle portion including a manual switch element (151) for selectively energising said battery-powered motor for translating rotational movement of said face gear means (42) into reciprocal movement of said rack means for reciprocally counter-rotating said tufts (16,18).

**16.** An automatic cleaning device as recited in Claim 1, wherein said rack means is characterised by:

an elongated rack member (52) disposed for reciprocal movement interiorly of said brush head portion, said rack member being coupled to a drive shaft (46);

a bearing member (120) fixedly attached to the interior of said brush head member and having an axial passageway for slidably receiving said drive shaft therethrough; and

a flexible valve member (124) carried by said bearing member and engageable with said drive shaft adapted to provide a one-way fluid seal relative to the interior of said brush head member.

**17.** An automatic cleaning device as recited in Claim 16, wherein said bearing member is characterised by:

a body member having aperture means (126) therein;

said flexible valve member having a flapper valve disposed adjacent one side of the base member adapted for flexibly opening and closing said aperture means in response to fluid pressure alternately exerted upon said flapper valve member in response to reciprocal movement of said rack member whereby residue materials contained in said brush head member are expelled therefrom.

**18.** An automatic cleaning device as recited in any preceding claim in combination with a support stand (30) therefor, said support stand characterised by:

a body having a generally hollow base portion (170) for mounting a first electrical charging means (28) and adapted to receive the handle of said brush having a second charging means (26);

said base portion including an integral angularly disposed tray-like portion (172) being of a hollow construction and adapted to receive a power cable (176) in stored relation therein;

said tray-like portion including an integral upstanding bracket portion (180) adjacent is terminal end and adapted for supporting the brush head portion of the device therein.

**19.** An automatic cleaning device as recited in Claim 18, wherein said support stand is characterised by:

having a generally L-shaped configuration in side elevation with said base portion (170) adapted to be mounted on a horizontal work surface for mounting said tray-like support portion (172) in a generally vertical position;

said tray-like support portion being alternately adapted for detachably mounting said device on a vertical support surface with said base portion extending generally normal to said support surface, or in a horizontal position with said base portion and extending normal thereto.

**20.** An automatic cleaning device as recited in Claim 19, wherein said base portion is characterised by:

a female socket means (28) adapted to receive a corresponding male socket portion (26) of said cleaning device;

a front support portion (185) made integral with said tray-like portion (172) and having a height so as to support said device including said brush in a downwardly inclined position for draining residue materials from said device when said stand is disposed in a generally horizontal position.

**Revendications**

**1.** Dispositif de nettoyage automatique (2) pour nettoyer des surfaces de travail, comprenant une enveloppe creuse (4) présentant un élément formant poignée (6) et un élément à tête de brosse (8), lequel élément à tête de brosse comporte un mécanisme d'entraînement à train d'engrenages (50) disposé à l'intérieur de ce dernier et comprenant une crémaillère (52) entraînée par moteur et qui, en effectuant un mouvement alternatif, communique une rotation alternative opposée à des organes à engrenage porte-touffe avoisinants, caractérisé en ce que la crémaillère (52) est en prise, durant tout son mouvement alternatif, avec un train d'organes à engrenage porte-touffe (72, 76, 80, 84, 88) par l'intermédiaire d'un seul organe à engrenage porte-touffe moteur (72), ledit train d' engrenages comprenant un certain nombre d'organes à engrenage porte-touffe menés (76, 80, 84, 88) s'engrenant mutuellement et auxquels, durant le mouvement alternatif de la crémaillère, est communiquée par ledit

15

organe à engrenage porte-touffe une rotation alternative opposée sans mise en prise motrice de la crémaillère.

2. Dispositif de nettoyage automatique selon la revendication 1, dans lequel les organes à engrenage porte-touffe moteurs et menés sont caractérisés en ce que:

un élément formant corps (92) présente une partie réceptrice de touffe (96, 108) et, réalisée en une pièce avec cette dernière, une partie à engrenage respectivement motrice ou menée (100, 114) ; et

la partie à engrenage motrice (100) de l'organe à engrenage moteur présentant une largeur axiale plus grande que la largeur axiale correspondante de la partie à engrenage menée (114) de l'organe à engrenage mené ;

de sorte que la crémaillère (52) ne s'engrène sensiblement avec la partie à engrenage motrice (100) de l'organe à engrenage moteur qu'à une extrémité de celui-ci et que les parties à engrenage menées (114) s'engrènent les unes avec les autres de façon à être entraînées.

3. Dispositif de nettoyage automatique selon la revendication 1 ou 2, dans lequel la crémaillère est caractérisée par:

un élément allongé formant crémaillère (52) et présentant de multiples dents d'entraînement (64) espacées latéralement et disposées de deux côtés opposés de ce dernier;

ledit élément formant crémaillère comportant un organe de guidage (66) disposé d'une manière générale entre les dents d'entraînement pour guider le mouvement alternatif de la crémaillère par rapport audit organe à engrenage porte-touffe moteur (72).

4. Dispositif de nettoyage automatique selon l'une quelconque des revendications 1 à 3, dans lequel les organes à engrenage porte-touffe moteur et menés sont caractérisés par une partie à engrenage motrice ou menée, la partie à engrenage motrice (100) de l'organe à engrenage porte-touffe moteur étant en prise de façon motrice avec la crémaillère (52) de telle manière que les organes à engrenage portetouffe menés (76) sont animés, par engrènement avec la partie à engrenage motrice (100) de l'organe à engrenage porte-touffe moteur (72), d'une rotation alternative opposée, tout en étant sensiblement exempts de mise en prise motrice avec la crémaillère.

5. Dispositif de nettoyage automatique selon l'une quelconque des revendications précédentes, dans lequel les organes à engrenage porte-touffe moteur et menés sont caractérisés par une partie réceptrice de touffe (96, 108) et, réalisée en une pièce avec celle-ci, une partie à engrenage motrice ou menée (100, 114), cette partie réceptrice permettant à une touffe de filaments (16, 18) d'y être retenue de manière amovible.

6. Dispositif de nettoyage automatique selon la revendication 5, dans lequel les touffes (16, 18) sont caractérisées par un faisceau de filaments en matière polymère constituant les touffes, les filaments dans chaque touffe étant réunis par soudage à une extrémité pour former un corps sensiblement plein (17, 19) en forme de masse destiné à être introduit de manière amovible et sorti des parties réceptrices de touffes (96, 108).

7. Dispositif de nettoyage automatique selon la revendication 5 ou 6, caractérisé en ce que :

les touffes (16, 18) sont disposées en au moins deux rangées placées sur de deux côtés opposés de la crémaillère (52);

les touffes dans chacune des rangées sont orientées d'une manière sensiblement décalée les unes par rapport aux autres ; et

les touffes voisines dans chacune des rangées étant alternativement relativement longues et relativement courtes, en longueur axiale, les unes par rapport aux autres.

8. Dispositif de nettoyage automatique selon l'une quelconque des revendications précédentes, caractérisé en ce que :

les éléments formant supports supérieur et inférieur (54, 56) définissent entre eux une cavité (58) et sont aptes à recevoir dans celle-ci les organes porte-touffe moteurs et menés;

les organes porte-touffe moteurs et menés comprennent des organes à engrenage moteurs et menés (72, 76), chacun desquels comprend, réalisées en une seule pièce avec ces derniers, des parties à engrenage motrice et menée (100, 114) et des parties réceptrices de touffes (96, 108); et

les organes à engrenage moteurs et menés peuvent être amenés à tourner, les parties réceptrices s'étendant à travers eux et étant en communication avec l'extérieur de l'élément formant support inférieur (56) de façon à être aptes à recevoir les touffes.

9. Dispositif de nettoyage automatique selon la revendication 8, caractérisé en ce que les éléments formant supports supérieur et inférieur (54, 56) définissent une ouverture d'accès (62) à une extrémité communiquant avec la cavité, cette ouverture d'accès étant apte à recevoir la crémaillère (52) de façon que celle-ci puisse effectuer un mouvement alternatif à travers elle.

10. Dispositif de nettoyage automatique selon la revendication 9, dans lequel l'élément formant support inférieur (56) est caractérisé par un certain nombre d'ouvertures disposées sensiblement symétriquement, permettant aux parties réceptrices de touffes (96, 108) des organes à engrenage moteurs et menés d'être reçues à travers elles de manière à pouvoir tourner.

11. Dispositif de nettoyage automatique selon la revendication 10, dans lequel la crémaillère est caractérisée par:
   un élément allongé formant crémaillère (52) présentant de deux côtés opposés de celui-ci des dents (64) réalisées en une pièce avec la crémaillère;
   les dents de crémaillère s'étendant perpendiculairement à l'axe longitudinal de la crémaillère et comportant au moins une partie en forme de came (66) qui, servant de guide et réalisée en une pièce avec la crémaillère, s'étend sensiblement le long de la longueur de celle-ci ; et
   la partie en forme de came servant de guide étant apte à exercer une action de manoeuvre et de guidage en coopération avec une surface intérieure en regard définie par l'ouverture d'accès (62) à la cavité (55) et à l'un des éléments formant supports (54, 56) afin de maintenir l'alignement de la crémaillère durant le mouvement d'entraînement alternatif de celle-ci.

12. Dispositif de nettoyage automatique selon la revendication 11, dans lequel la partie à engrenage motrice (100) des organes à engrenage moteurs est caractérisée par:
   une largeur axiale supérieure à la largeur axiale correspondante de la partie à engrenage menée (114) des organes à engrenage menés, sensiblement seule la moitié supérieure de la partie à engrenage motrice pouvant venir en prise avec la crémaillère (52) ; et
   sensiblement seule la moitié inférieure de la partie à engrenage motrice (100) engrenant avec la partie à engrenage menée correspondante (114) des organes à engrenage menés;
   de sorte que des rotations alternatives successives des organes à engrenage moteurs communiquent des rotations alternatives opposées aux organes à engrenage menés.

13. Dispositif de nettoyage automatique selon la revendication 12, dans lequel les éléments formant supports (54, 56) sont caractérisés en ce que :
   ils sont réalisés en une matière polymère ; et
   l'élément formant support supérieur (54) présente une région agrandie (57), en forme de bossage, voisine de l'une de ses extrémités et apte à y recevoir la largeur axiale relativement grande des parties à engrenage motrices (100).

14. Dispositif de nettoyage automatique selon l'une quelconque des revendications précédentes, dans lequel l'élément formant poignée est caractérisé par:
   un moteur (20) alimenté en énergie par batterie présentant un arbre de sortie pouvant être amené à tourner;
   un organe formant pignon (40) fixé à l'arbre de sortie de façon à être lié en rotation à celui-ci en rotation ;
   une roue de champ (42) engrenant avec le pignon ;
   un bras de manivelle (44) relié, au niveau d'une première extrémité, de manière articulée et excentriquement, à la roue de champ; et
   un arbre d'entraînement de crémaillère (46) relié, au niveau d'une première extrémité, de manière articulée à une seconde extrémité du bras de manivelle, et relié à une extrémité de la crémaillère au niveau d'une seconde extrémité de l'arbre d'entraînement de crémaillère.

15. Dispositif de nettoyage automatique selon la revendication 14, caractérisé par:
   un ensemble formant commutateur de commande (14) disposé à l'intérieur de la partie formant poignée et comprenant un élément formant commutateur manuel (151) pour la mise en circuit sélective du moteur alimenté par batterie afin de transformer le mouvement de rotation de la roue de champ (42) en un mouvement alternatif de la crémaillère pour communiquer un mouvement de rotation alternatif opposé aux touffes (16, 18).

16. Dispositif de nettoyage automatique selon la revendication 1, dans lequel la crémaillère est caractérisée par:

un élément allongé formant crémaillère (52) monté de façon à pouvoir effectuer un mouvement alternatif à l'intérieur de la partie formant tête de brosse, la crémaillère étant reliée à un arbre d'entraînement (46);

un élément formant support (120) relié de manière fixe à l'intérieur de l'élément à tête de brosse et présentant un passage axial pour permettre à l'arbre d'entraînement d'y être reçu de façon à pouvoir coulisser à travers lui ; et

un élément formant clapet flexible (124) porté par l'élément formant support et pouvant être mis en prise avec l'arbre d'entraînement de façon à former un joint d'étanchéité aux fluides à sens unique par rapport à l'espace intérieur de l'élément à tête de brosse.

17. Dispositif de nettoyage automatique selon la revendication 16, dans lequel l'élément formant support est caractérisé par :

un élément formant clapet présentant une ouverture (126);

l'élément formant clapet flexible présentant un clapet à volet disposé au voisinage d'un côté de l'élément formant support et qui est apte à ouvrir et fermer l'ouverture de façon flexible en réaction à une pression de fluide exercée par intermittence sur le ·clapet à volet en réaction au mouvement alternatif de la crémaillère, permettant ainsi à des matières résiduelles contenues dans l'élément à tête de brosse d'être expulsées de celui-ci.

18. Dispositif de nettoyage automatique selon l'une quelconque des revendications précédentes en combinaison avec un poste formant support (30) pour ce dispositif, le poste formant support étant caractérisé par:

un corps présentant une partie de base sensiblement creuse (170) destinée au montage d'un premier moyen de recharge électrique (28), et apte à recevoir la poignée de la brosse munie d'un second moyen de recharge (28);

la partie de base comportant, réalisée en une pièce avec elle, une partie en forme de plateau (172) disposée sous un certain angle par rapport à cette dernière et étant d'une construction creuse de façon à pouvoir y recevoir un câble d'alimentation électrique (176) pouvant y être rangé; et

la partie en forme de plateau comportant, réalisée en une pièce avec cette dernière, une partie à bras vertical (180) voisine de son extrémité terminale et apte à y supporter la partie formant tête de brosse du dispositif.

19. Dispositif de nettoyage automatique selon la revendication 18, dans lequel le poste formant support est caractérisé en ce qu'il :

présente une configuration sensiblement en L, en élévation latérale, la partie de base (170) étant apte à être montée sur une surface de travail horizontale pour monter la partie formant support en forme de plateau (172) dans une position sensiblement verticale,

le support en forme de plateau permettant de monter le poste de manière amovible, soit sur une surface d'appui verticale, la partie de base s'étendant sensiblement perpendiculairement à la surface d'appui, soit dans une position horizontale, la partie de base s'étendant perpendiculairement à celle-ci.

20. Dispositif de nettoyage automatique selon la revendication 19, dans lequel la partie de base est caractérisée par:

une prise électrique (28) apte à recevoir une fiche correspondante (26) du dispositif de nettoyage ; et

une partie formant support frontal (185) réalisée en une pièce avec la partie en forme de plateau (172) et présentant une hauteur suffisante pour supporter le dispositif, y compris la brosse, dans une position inclinée vers le bas permettant aux matières résiduelles de s'écouler hors du dispositif lorsque le poste est placé dans une position sensiblement horizontale.

**Ansprüche**

1. Automatische Reinigungsvorrichtung (2) zum Reinigen von Arbeitsflächen (zu bearbeitenden Flächen), umfassend ein hohles Gehäuse (4) mit einem Griffstück (6) und einem Bürstenkopfelement (8), wobei das Bürstenkopfelement eine in seinem Inneren angeordnete Antriebsstrangeinrichtung (50) enthält, die eine kraft- oder motorgetriebene Zahnstangeneinheit (52) aufweist, welche bei ihrer Hin- und Herbewegung eine wechselweise gegenläufige Drehung benachbarter Büschelhalter-Zahnradeinrichtungen hervorbringt, dadurch gekennzeichnet, daß die Zahnstangeneinheit (52) während ihrer vollen hin- und hergehenden oder Pendelbewegung mit einer Reihe von Büschelhalter-Zahnradeinrichtungen (72, 76, 80, 84, 88) über eine einzige Büschelhalter-Antriebszahnradeinrichtung (72) in Eingriff gelangt und die Reihe der Zahnradeinrichtungen eine Anzahl von miteinander kämmenden Büschelhalter-Abtriebszahnradeinrichtungen (76, 80, 84, 88) aufweist, die bei der Hin- und Herbewegung der Zahnstangeneinheit durch die Büschelhalter-Antriebszahnradeinrichtungen in wechselweise gegenläufige Drehung versetzt werden, ohne (selbst) in Antriebseingriff mit der Zahnstangeneinheit zu stehen.

2. Automatische Reinigungsvorrichtung nach Anspruch 1, welcher die Büschelhalter-Antriebs- und -Abtriebszahnradeinrichtungen gekennzeichnet sind durch
ein Körperelement (92) mit einem Büschelaufnahme-Fassungsabschnitt (96, 108) und einem (materialeinheitlich) angeformten Antriebs- oder Abtriebszahnradabschnitt (100, 114), wobei der Antriebszahnradabschnitt (100) an der Antriebszahnradeinrichtung eine größere axiale Breite als die entsprechende axiale Breite als die entsprechende axiale Breite des Abtriebszahnradabschnitts (114) an der Abtriebszahnradeinrichtung aufweist,
so daß die Zahnstangeneinheit (53) an ihrem einen Ende praktisch nur mit den Antriebszahnradabschnitten (100) der Antriebszahnradeinrichtung (en) kämmt und die Abtriebszahnradabschnitte in Antriebseingriff miteinander stehen.

3. Automatische Reinigungsvorrichtung nach Anspruch 1 oder 2, bei welcher die Zahnstangeneinheit gekennzeichnet ist durch ein langgestrecktes Zahnstangenelement (52) mit einer Anzahl von seitlich beabstandeten Antriebszähnen (64) auf gegenüberliegenden Seiten desselben,
wobei das Zahnstangenelement eine im wesentlichen zwischen den Antriebszähnen angeordnete Führungs- oder Leiteinrichtung (66) zum Führen der hin- und hergehenden Bewegung des Zahnstangenelements relativ zu der Büschelhalter-Antriebszahnradeinrichtung (72) aufweist.

4. Automatische Reinigungsvorrichtung nach Anspruch 1, 2 oder 3, bei welcher die Büschelhalter-Antriebs- und -Abtriebszahnradeinrichtungen gekennzeichnet sind durch
einen Antriebs- oder Abtriebszahnradabschnitt, wobei die Antriebszahnradabschnitte (114) der Büschelhalter-Antriebszahnradeinrichtung derart in Antriebseingriff mit der Zahnstangeneinheit (52) stehen, daß die Büschelhalter-Abtriebszahnradeinrichtungen (76) durch den Eingriff mit den Antriebszahnradabschnitten (100) der Büschelhalter-Antriebszahnradeinrichtung (72) in wechselweise gegenläufige Drehung versetzt werden, während sie praktisch frei sind von einem Antriebseingriff mit der Zahnstangeneinheit.

5. Automatische Reinigungsvorrichtung nach einem der vorangehenden Ansprüche, bei welcher die Büschelhalter-Antriebs- und -Abtriebseinrichtungen gekennzeichnet sind durch
einen Büschelhalter-Fassungsabschnitt (96, 108) und einen angeformten Antriebs- oder Abtriebszahnradabschnitt (100, 114), wobei der Fassungsabschnitt ein Büschel aus Filamenten oder Fasern (16, 18) trennbar zu halten vermag.

6. Automatische Reinigungsvorrichtung nach Anspruch 5, bei welcher die Büschel (16, 18) gekennzeichnet sind durch
ein Bündel von jeweils die (ein) Büschel bildenden polymeren Filamenten oder Fasern,
wobei die Filamente oder Fasern in jedem Büschel am einen Ende unter Bildung eines im wesentlichen massiven, masseartigen Körpers (17, 19) für das trennbare Einsetzen und Herausziehen in die bzw. aus den Büschelhalter-Fassungsabschnitte(n) (96, 108) miteinander verschmolzen sind.

7. Automatische Reinigungsvorrichtung nach Anspruch 5 oder 6, dadurch gekennzeichnet, daß
die Büschel (16, 18) in mindestens zwei Reihen auf gegenüberliegenden Seiten der Zahnstangeneinheit (52) angeordnet sind,
die Büschel in jeder Reihe in einem im wesentlichen versetzten oder gestaffelten Verhältnis zueinander

19

orientiert sind und

die einander benachbarten Büschel in jeder der Reihen relativ zueinander jeweils (abwechselnd) größere und kürzere axiale Längen aufweisen.

8. Automatische Reinigungsvorrichtung nach einem der vorangehenden Ansprüche, gekennzeichnet durch obere und untere Lagerelemente (54, 56), die zwischen sich einen Hohlraum (58) festlegen und dazwischen die Büschelhalter-Antriebs-und -Abtriebseinrichtungen aufzunehmen vermögen, wobei die Büschelhalter-Antriebs- und -Abtriebseinrichtungen Antriebs-und Abtriebszahnradelemente (72, 76) aufweisen, die jeweils materialeinheitliche Antriebs- und Abtriebszahnradabschnitte (100, 114) und materialeinheitliche Büschelhalter-Fassungsabschnitte (96, 108) aufweisen, wobei die Antriebs- und Abtriebszahnradelemente drehbar sind und die Fassungsabschnitte sich durch sie hindurch erstrecken, mit der Außenseite des unteren Lagerelements (56) in Verbindung stehen und die Büschel aufzunehmen vermögen.

9. Automatische Reinigungsvorrichtung nach Anspruch 8, gekennzeichnet durch obere und untere Lagerelemente (54, 56), die am einen Ende eine mit dem Hohlraum in Verbindung stehende Zugangsöffnung (62) festlegen, welche die sich durch sie erstreckende, hin- und hergehend bewegte Zahnstangeneinheit (52) aufzunehmen vermag.

10. Automatische Reinigungsvorrichtung nach Anspruch 9, bei welcher das untere (Lager-)Element (56) gekennzeichnet ist durch eine Anzahl von im wesentlichen symmetrisch orientierten Öffnungen oder Bohrungen zum drehbaren Aufnehmen der sich hindurcherstreckenden Fassungsabschnitte (96, 108) der Antriebs- und Abtriebszahnradelemente.

11. Automatische Reinigungsvorrichtung nach Anspruch 10, bei welcher die Zahnstangeneinheit gekennzeichnet ist durch ein langgestrecktes Zahnstangenelement (52) mit (materialeinheitlich) angeformten Zahnstangenzähnen (64) auf gegenüberliegenden Seiten desselben, wobei sich die Zahnstangenzähne senkrecht zur Längsachse des Zahnstangenelements erstrecken und mindestens einen angeformten kurvenartigen Führungs- oder Leitabschnitt (66), der sich praktisch längs der Länge erstreckt, aufweisen, und wobei der kurvenartige Leitabschnitt abwälzend und führend mit einer zugewandten Innenfläche, die durch die Zugangsöffnung (62) in den Hohlraum (55) und in einem der Lagerelemente (54, 56) festgelegt ist, zusammenwirkt, um die Ausrichtung des Zahnstangenelements bei seiner hin- und hergehenden Antriebsbewegung aufrechtzuerhalten.

12. Automatische Reinigungsvorrichtung nach Anspruch 11, bei welcher die Antriebszahnradabschnitte (100) der Antriebszahnradeinrichtung gekennzeichnet sind durch eine axiale Breite, die größer ist als die entsprechende axiale Breite der Abtriebszahnradabschnitte (114) der Abtriebszahnradelemente, so daß praktisch nur die obere Hälfte des Antriebszahnradabschnitts mit dem Zahnstangenelement (52) in Eingriff gelangt, wobei praktisch die untere Hälfte des Antriebszahnradabschnitts (100) mit dem zugeordneten Abtriebszahnradabschnitt (114) der Abtriebszahnradelemente in Eingriff steht, so daß aufeinanderfolgende wechselweise (Hin- und Her-)Drehungen der Antriebszahnradelemente wechselweise gegenläufige Drehungen der Abtriebszahnradelemente hervorbringen.

13. Automatische Reinigungsvorrichtung nach Anspruch 12, dadurch gekennzeichnet, daß die Lagerelemente (54, 56) aus einem polymeren Material geformt sind und das obere Lagerelement (54) im Bereich seines einen Endes einen erweiterten nabenartigen Bereich (57) zur Aufnahme der relativ vergrößerten axialen Breite der Antriebszahnradabschnitte (100) darin aufweist.

14. Automatische Reinigungsvorrichtung nach einem der vorangehenden Ansprüche, bei welcher das Griffstück gekennzeichnet ist durch einen batteriegespeisten Motor (20) mit einer drehbaren Ausgangswelle (41),

EP 0 208 401 B1

ein an der Ausgangswelle mit dieser mitdrehbar angebrachtes Ritzelelement (40),
ein mit dem Ritzel in Eingriff stehendes Plan(zahn)rad (42), ein mit einem ersten Ende schwenkbar und außermittig am Planrad angebrachtes Kurbelarmelement (44) und eine an einem ersten Ende schwenkbar mit einem zweiten Ende des Kurbelarmelements verbundene und an einem zweiten Ende mit dem einen Ende der Zahnstangeneinheit verbundene Zahnstangen-Antriebswelle (46).

15. Automatische Reinigungsvorrichtung nach Anspruch 14, gekennzeichnet durch
eine im Inneren des Griffstücks angeordnete Steuerschalteranordnung (14) mit einem Hand-Schalterelement (151) zum selektiven Aktivieren des batteriegespeisten Motors für die Umsetzung der Drehbewegung des Planrads (42) in eine hin- und hergehende Bewegung der Zahnstangeneinheit zwecks wechselweiser gegenläufiger Drehung der Büschel (16, 18).

16. Automatische Reinigungsvorrichtung nach Anspruch 1, bei welcher die Zahnstangeneinheit gekennzeichnet ist durch
ein langgestrecktes Zahnstangenelement (52), das zur Hin- und Herbewegung im Inneren des Bürstenkopfabschnitts angeordnet und mit einer Antriebswelle (46) gekoppelt ist,
ein fest an der Innenfläche des Bürstenkopfelements angebrachtes Lagerelement (120) mit einem axialen Durchgang zur verschieblichen Aufnahme der Antriebswelle (durch diesen Durchgang hindurch), und
ein vom Lagerelement getragenes und mit der Antriebswelle in Eingriff oder Berührung bringbares flexibles Ventilelement (124) zur Herstellung einer Einweg-Fluidumabdichtung relativ zum Inneren des Bürstenkopfelements.

17. Automatische Reinigungsvorrichtung nach Anspruch 16, bei welcher das Lagerelement gekennzeichnet ist durch
ein Körperelement mit einer darin vorgesehenen Öffnung (126), wobei das flexible Ventilelement ein an der einen Seite des Basis- oder Körperelements angeordnetes Klappenventil aufweist, welches die Öffnung in Abhängigkeit von einem Fluidumdruck flexibel zu öffnen und zu schließen vermag, der entsprechend der Hin- und Herbewegung des Zahnstangenelements abwechselnd auf das Klappenventilelement ausgeübt wird, so daß im Bürstenkopfelement enthaltene Rückstände aus ersterem ausgetrieben werden.

18. Automatische Reinigungsvorrichtung nach einem der vorangehenden Ansprüche in Kombination mit einem Tragständer (30) dafür, bei welcher der Tragständer gekennzeichnet ist durch
einen Körper mit einem im wesentlichen hohlen Basisteil (170) zur Anbringung einer ersten elektrischen Ladeeinheit (28) und zur Aufnahme des eine zweite Ladeeinrichtung (26) aufweisenden Griffstücks der Bürste, wobei der Basisteil einen (materialeinheitlich) angeformten, abgewinkelten muldenförmigen Abschnitt (172) einer hohlen Ausgestaltung, der ein Stromkabel (176) in einem (darin) verstauten Zustand aufzunehmen vermag, aufweist, und
der muldenförmige Abschnitt an seinem Endteil einen angeformten, hochragenden Halterungsteil (180) zum Stützen oder Haltern des Bürstenkopfteils der Vorrichtung (darin) aufweist.

19. Automatische Reinigungsvorrichtung nach Anspruch 18, dadurch gekennzeichnet, daß
der Tragständer in Seitenansicht eine im wesentlichen L-förmige Ausgestaltung aufweist, wobei der Basisteil (170) an einer waagerechten Arbeitsfläche montierbar ist, um den muldenförmigen Tragabschnitt (172) in einer im wesentlichen lotrechten Stellung zu haltern,
wobei der muldenförmige Tragabschnitt vorgesehen ist für die wahlweise abnehmbare Halterung der Vorrichtung an einer lotrechten Tragfläche, in welcher der Basisteil sich im wesentlichen senkrecht zur Tragfläche erstreckt, oder in einer waagerechten Lage mit dem Basisteil und senkrecht dazu verlaufend.

20. Automatische Reinigungsvorrichtung nach Anspruch 19, dadurch gekennzeichnet, daß
der Basisteil eine Außen-Fassungseinrichtung (28), die einen entsprechenden Innen-Steckerabschnitt (26) der Reinigungsvorrichtung aufzunehmen vermag,
und einen materialeinheitlich mit dem muldenförmigen Abschnitt (172) ausgebildeten vorderen Trag- oder Stützteil (185) aufweist, der eine solche Höhe besitzt, daß er die Vorrichtung mit Bürste in einer abwärts geneigten Stellung zum Ablaufenlassen von Rückständen aus der Vorrichtung, wenn der Ständer in im wesentlichen waagerechter Lage angeordnet ist, zu haltern oder zu stützen vermag.

21

FIG. 1

FIG. 2

Fig. 4

Fig. 3

Fig. 5

Fig.6

Fig.7

Fig.8

Fig. 9

Fig. 10

Fig. 11

Fig. 12

Fig. 13

Fig. 14A

Fig. 14

Fig. 15

Fig. 16

Fig. 17

Fig. 18

Fig. 19

Fig. 20

Fig. 21

Fig. 22

Fig. 23

Fig. 25

Fig. 26

Fig. 24

Fig. 27

Fig. 29

Fig. 30

Fig. 28